# EUROPEAN PATENT SPECIFICATION

(11) **EP 1 923 943 B1**
(45) Date of publication and mention of the grant of the patent: **17.07.2013**
(21) Application number: 05778475.3
(22) Date of filing: 06.09.2005
(51) Int. Cl.: H01M 8/02, H01M 8/10

(54) **COMPONENT FOR CONSTITUTING FUEL CELL**
BAUTEIL ZUM BAU EINER BRENNSTOFFZELLE
COMPOSANT DE CONSTITUTION D'UNE PILE A COMBUSTIBLE

(43) Date of publication of application: 21.05.2008
(73) Proprietor: NOK Corporation, Minato-ku Tokyo 105-8585 (JP)
(72) Inventor: OKABE, Tatsuya, Fujisawa-shi Kanagawa 251-0042 (JP)
(74) Representative: TBK
(86) International application number: PCT/JP2005/016285
(87) International publication number: WO 2007/029309

(56) References cited:
- EP-A- 1 906 476
- WO-A1-02/01658
- WO-A1-02/43172
- JP-A- 2001 509 304
- JP-A- 2001 510 932
- JP-A- 2002 042 838
- US-A- 6 057 054

## Description

### Technical Field

The present invention relates to a component for constituting a fuel cell forming an assembly of constituting elements for the fuel cell, and in particular relates to a component for constituting a fuel cell having a gasket formed integrally with the membrane-electrode assembly (hereinafter referred to as MEA).

### Background Art

As a conventional sealing structure for sealing a gas passage in each cell of the fuel battery stacks, such a structure that a gasket made of an elastic member such as a rubber is formed on a separator is most commonly used. Further, there has been proposed a simplified cell-structure which is not necessary to form a seal on the separator by forming a seal lip of gasket on a gas diffusion layer (hereinafter referred to as GDL) made of a porous material and constituting a part of the MEA, and impregnating a liquid rubber into an area where the seal lip is formed to provide an independent sealing capability of the GDL (Refer to Patent Document 1).

However, according to the above-mentioned prior art, it is necessary to impregnate liquid rubber and to provide the seal lip with each of the GDLs disposed on both sides of ion exchange membranes of the MEA. Therefore, there is a disadvantage that twice molding processes are required for the formation of gasket or when the gasket is intended to be formed by a single molding process, a through hole has to be provided with the MEA. Further, there is concern of gas leakage depending on the rubber impregnation conditions, and there is a disadvantage that when the MEA is compressed, an excessive clamping force is required against the reaction force of the rubber impregnated portion of the GDL.
Patent Document 1: JP-A-2004-95565

US 6 057 054 A discloses an improved membrane electrode assembly ("MEA") comprising coextensive ion exchange membrane and electrode layers and a resilient fluid impermeable integral seal made by impregnating a sealing material into the porous electrode layers in the sealing regions. The integral seal preferably circumscribes the electrochemically active area of the MEA. In addition, the integral seal preferably extends laterally beyond the edge of the MEA, enveloping the peripheral region including the side edge of the MEA. The uncured sealant material is preferably a flow processable elastomer that is applied to the MEA using a vacuum injection molding process. In preferred embodiments, the seal has a plurality of spaced, parallel raised ribs with cross-ribs extending therebetween at spaced intervals. The parallel raised ribs and cross-ribs provide compartmentalized seals that provide improved protection against fluid leaks.

### Disclosure of the Invention

The present invention is made by taking the above matters into consideration, and an object of the present invention is to provide a component for constituting a fuel cell having a gasket formed integrally with the MEA, which is capable of forming the gasket by a single molding process, and which is not necessary to provide a through hole with the MEA, and in which less clamping force is needed for the compression of the MEA.

In order to achieve the above-mentioned object, the present invention is characterized by the features of claim 1, There is provided a component for constituting a fuel cell comprising an MEA configured to be provided between a pair of separators and to be compressed when assembling the cells, a rubber impregnated portion formed by impregnating a part of the rubber as a gasket-forming material into the outer peripheral edge of the MEA, a flat gasket portion made of rubber formed integrally with the outside of the rubber impregnated portion, seal lip portions formed on the flat gasket portion, and at least one convex portion formed on the flat gasket portion as a clearance when the seal lip portions are compressed, the thickness of rubber impregnated portion and the flat gasket portion being set to be equal to the thickness of MEA at the time of the assembly of the cells.

In the component for constituting a fuel cell having the above mentioned structure, there is provided such a configuration that the rubber impregnated portion is formed at the peripheral edge of the MEA, the flat gasket portion is formed at outer peripheral side of the rubber impregnated portion, and the seal lip portions and at least one convex portion are formed on the flat gasket portion, i.e. the gasket assembly is formed integrally with the MEA at the periphery thereof, but not formed on the respective surface sides of the MEA. Further, since the thickness of the rubber impregnated portion and flat gasket portion is set to be equal to the thickness of compressed MEA at the time of the assembly of the cells, the MEA and the seal lip portions of the gasket are compressed, while the rubber impregnated portion and the flat gasket portion are not compressed when assembling the cells.

According to the present invention, there is provided a component for constituting a fuel cell having a gasket formed integrally with the periphery of the MEA, thereby the formation of a gasket can be finished by a single molding process, and there is no need to form the through hole with the MEA. Further, since the MEA and seal lip portions of the gasket are compressed, but the rubber impregnated portion and the flat gasket portion are not compressed when assembling the cells, clamping force when the MEA is compressed can be reduced as compared with the case when the MEA, seal lip portions of the gasket, rubber impregnated portion and flat gasket portion are compressed all together. Therefore, according to the present invention, desired effects may be achieved by providing a component for constituting a fuel cell having a gasket formed integrally with the MEA, in which the gasket can be formed by a single molding process, and in which there is no need to form the through hole with the MEA, and in which less clamping force is required for the compression of the MEA.

Further, as the MEA and seal lip portions are compressed during assembling the cells, reaction force is generated, and the rubber impregnated portion and flat gasket portion begin to be compressed when the thickness of MEA reaches to a predetermined value. Thus, the reaction force generated by the compression of the rubber impregnated portion and flat gasket portion is applied to the reaction force generated by the compression of the MEA and seal lip portions, thereby the magnitude of reaction force becomes to increase rapidly. As a result, it becomes possible to utilize such phenomenon for the dimensional control, i.e. the dimensional control at the time of the assembly of the cells can be done easily by stopping the compression when the reaction force becomes to increase rapidly.

### Brief Description of the Drawings

Figs. 1A and 1B are cross sectional views of a main portion of a component for constituting a fuel cell in accordance with an embodiment of the present invention, wherein Fig. 1A shows a state before assembling the cells, while Fig. 1B shows a state after the assembly of the cells, and
Fig. 2 is an illustration explaining the production of the component for constituting a fuel cell.

### Explanation of the reference numerals

1 ... component for constituting fuel cell
2 ... Membrane-Electrode Assembly (MEA)
3 ... gasket (assembly)
4 ... separators
5 ... rubber impregnated portion
6 ... flat gasket portion
7 ... seal lip portion
8 ... convex portion
10 ... forming mold
11 ... parting portion
12, 13 ... formation space
14 ... pressing portion of MEA

### Best Mode for Carrying out the Invention

Now the present invention includes the following embodiments.
(1) According to the first embodiment of the present invention, there is provided a component for constituting fuel cell configured so that a rubber impregnated portion having the same thickness as that of MEA when compressed is formed along the entire periphery of the MEA, and a flat gasket portion is formed outside the rubber impregnated portion, and seal lip portions are formed on the flat gasket portion, and further concave portions are formed inside and outside of the seal lip portions, respectively, to allow to form concave portion of the seal lip portions when compressed. Further, the thickness of the impregnated portion of the MEA and flat gasket portion is set to be equal to the thickness of the compressed MEA at the time of the assembly of the cells.
(2) According to the second embodiment of the present invention, there is provided a component for constituting fuel cell configured so that a rubber impregnated portion having the same thickness as that of the MEA when compressed is formed about 2 mm in width along the entire periphery of the MEA, and a flat gasket portion is formed outside of the rubber impregnated portion, and seal lip portions are formed on the flat gasket portion, and further concave portions are formed inside and outside of the seal lip portions, respectively, to allow the deformation of the seal lip portions when compressed. Further, the thickness of the impregnated portion of the MEA and flat gasket portion is set to be equal to the thickness of the compressed MEA at the time of the assembly of the cells, thereby the dimensional control at the time of the assembly of the cells can be effected easily.
(3) According to the first or second embodiment of the present invention as described above, since only the seal lip portions are compressed at the time of the assembly of the cells, it becomes possible to effect the assembly of cells with lower clamping force.

Further, since the thickness of the impregnated portion and flat gasket portion is set to be equal to the thickness of the compressed MEA at the time of the assembly of the cells, the dimensional control can be done easily. That is to say, when the MEA is compressed at the time of the assembly of the cells, only the seal lip portions are compressed, while the impregnated portion and flat gasket portion are not compressed, it becomes possible to effect the assembly of the cells with lower clamping force. Further, in case of controlling the cell-thickness at the time of the assembly of the cells, the dimensional control can be effected easily in consideration of the difference in reaction forces of the seal lip portions and the flat gasket portion, since the thickness of the impregnated portion and flat gasket is set to be equal to that of the compressed MEA at the time of the assembly of the cells.

### Embodiments

Next, a description will be given of one embodiment in accordance with the present invention with reference to the accompanying drawings.

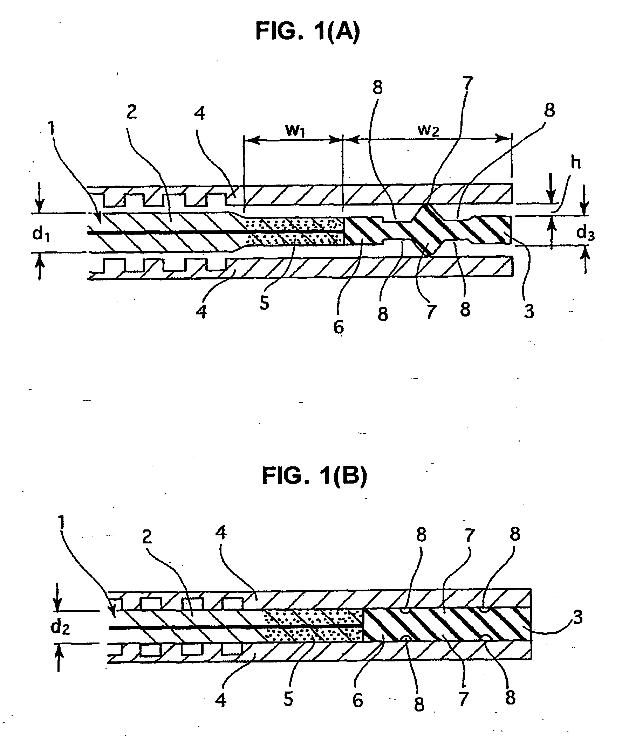

Figs. 1A and 1B are cross sectional views of a main portion of a component for constituting fuel cell (referred to also as an integrated product of MEA and gasket) in accordance with one embodiment of the present invention, wherein Fig. 1A shows a state before assembling the cells, while Fig. 1B shows a state after the assembly of the cells.

The component for constituting a fuel cell according to one embodiment of the present invention is, as shown, an integral product of the MEA 2 (membrane-electrode assembly) and gasket 3 in which the gasket 3 is formed integrally with the MEA 2. The MEA 2 is provided between a pair of the separators 4, 4 and compressed at the time of the assembly of the cells. At the peripheral edge of the MEA 2 there is provided a rubber impregnated portion 5 or area formed by impregnating a part of the rubber which is a forming material of the gasket. Further, a flat gasket portion 6 made of rubber is formed integrally with and outside of the rubber impregnated portion 5, seal lip portions 7 are formed in plane with the flat gasket portion 6 and are closely contacted with the separators 4 so as to effect sealing function, and concave portions 8 are formed inside and outside of the seal lip portions 7, respectively, to allow the deformation of the seal lip portions 7 when compressed.

The MEA 2 comprises, for example, an ion exchange membrane, electrode layers provided on the upper and lower surfaces of the ion exchange membrane, and gas diffusion layers (GDL) provided on the respective surfaces of the electrode layers. Since the GDL is made of porous material such as carbon fiber and the like, the rubber may be impregnated into the porous material, and therefore the MEA 2 may be compressed so that the thickness d1 (Fig. 1A) becomes to be d2 (Fig.1B) at the time of the assembly of the cells. The thickness d1 of the MEA 2 before the assembly of the cells is, for example, approximately 1 mm, while the thickness d2 of the compressed MEA 2 is, for example, approximately 0.6 - 0.7 mm at the time of the assembly of the cells.

In contrast with the MEA 2 being compressed to change the thickness thereof from d1 to d2, the thickness d3 of the rubber impregnated portion 5 and flat gasket portion is set, as from the beginning of the molding process, to be the same as the thickness d2 of the compressed MEA 2 at the time of the assembly of the cells (d3=d2), and there are provided seal lip portions 7 formed integrally on the upper and lower surfaces of the flat gasket portion 6 having such an established dimensions, and there are provided convex portions 8 formed inside and outside of the seal lip portions 7, respectively. The height h of each seal lip portion 7 is, for example, approximately 0.3 mm. Further, the width w1 of the rubber impregnated portion 5 is, for example, approximately 1 - 3 mm, and the width w2 of the flat gasket portion 6 (namely, width of the gasket 3) is, for example, approximately 3 mm.

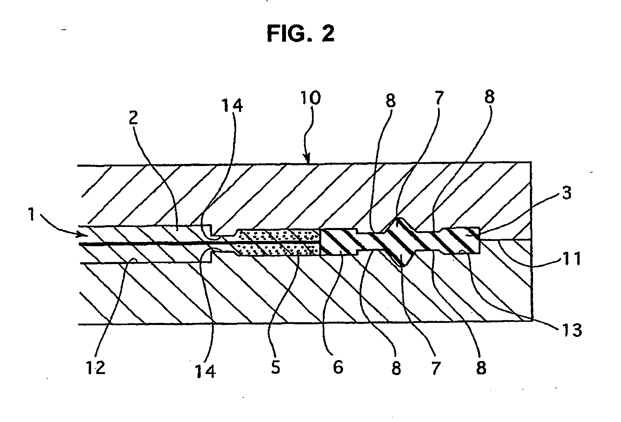

In the process of manufacturing the component for constituting a fuel cell as mentioned previously, the MEA 2 is inserted into the molding 10 and held at a prescribed position as shown in Fig. 2, and in this state the gasket 3 is formed by injecting the rubber as a molding material of the gasket into the forming space of the molding 10. In this process, a part of the rubber is impregnated into the peripheral portion of the MEA 2 to form the rubber impregnated portion 5. It is preferable to provide a formation space 12 into which the MEA 2 is to be inserted, a formation space 13 for the gasket 3 with the parting section 11 of the molding 10, and in addition to these spaces, to provide a protrusion-like pressing portion 14 so that a part of the MEA 2 is pressed to be formed in a narrowed area preventing the rubber impregnation.

In the component for constituting a fuel cell provide with the above mentioned structure, the gasket 3 is not formed at the respective surface sides of the MEA 2, but formed integrally with the MEA 2 at the periphery thereof as shown in Fig. 1A, since the structure is configured so that the rubber impregnated portion 5 is formed at the peripheral edge of the MEA 2 as mentioned above, and the flat gasket portion 6 is formed at the outside of the rubber impregnated portion 5, and seal lip portions 7 and convex portions 8 are formed in plane with the flat gasket portion 6. Thus, the formation of the gasket 3 can be finished by a single molding process with the use of mold 10 as shown in Fig. 1A, and there is no need to provide a material communicating portion such as a through hole and the like with the MEA 2.

Further, the MEA 2 and the seal lip portions 7 of the gasket 3 are compressed, but the rubber impregnated portion 5 and flat gasket portion 6 are not compressed as shown in Fig. 1B, since the thickness d3 of the rubber impregnated portion 5 and the flat gasket portion 6 is set to be the same as the thickness d2 of the compressed MEA 2 at the time of the assembly of the cells. Accordingly, it becomes possible to compress the MEA 2 with lower clamping force as compared with the case in which these portions are compressed all together.

Therefore, according to the present invention, desired effects may be achieved by providing a component for constituting a fuel cell 1 having a gasket 3 formed integrally with the MEA 2, in which the gasket 3 can be formed by a single molding process, and in which there is no need to form the through hole and the like with the MEA 2, and in which less clamping force is enough for the compression of the MEA 2.

Further, according to the present invention, as mentioned above, the dimensional control at the time of the assembly of the cells can be effected easily by utilizing the phenomenon that the reaction force becomes increased at a stroke when compressing the MEA.

## Claims

1. A component for constituting a fuel cell (1)
wherein a gasket (3) is formed integrally with a membrane-electrode assembly (2), wherein said component comprises:
said membrane-electrode assembly (2) provided between a pair of separators (4) and configured to be compressed when assembling the cells,
a rubber impregnated portion (5) formed by impregnating a part of the rubber as a molding material into the peripheral edge of the membrane-electrode assembly (2),
a flat gasket portion (6) formed integrally with the rubber impregnated portion (5) at the outside thereof and made of the rubber,
seal lip portions (7) formed on the flat gasket portion (6), and
at least one convex portion (8) formed on the flat gasket portion (6) as a clearance when the seal lip portions (7) are compressed; and said component being **characterised in that**
the thickness (d₃) of rubber impregnated portion (5) and flat gasket portion (6) before the assembly of cells is set to be equal to the thickness (d₂) of the membrane-electrode assembly (2) after the assembly of the cells, and
the thickness (d1) of the membrane-electrode assembly (2) before the assembly of cells is greater than the thickness (d2) of the membrane-electrode assembly (2) after the assembly of cells.

## Patentansprüche

1. Komponente zum Bilden einer Brennstoffzelle (1),
wobei eine Dichtung (3) einstückig mit einer Membranelektrodeneinheit (2) ausgebildet ist, wobei die Komponente Folgendes aufweist:
die Membranelektrodeneinheit (2), die zwischen einem Paar von Separatoren (4) vorgesehen ist und gestaltet ist, um komprimiert zu werden, wenn die Zellen zusammengebaut werden,
einen gummiimprägnierten Abschnitt (5), der durch ein Imprägnieren eines Teils des Gummis als ein Formungsmaterial in den Umfangsrand der Membranelektrodeneinheit (2) ausgebildet ist,
einen flachen Dichtungsabschnitt (6), der einstückig mit dem gummiimprägnierten Abschnitt (5) an dessen Außenseite ausgebildet ist und aus dem Gummi hergestellt ist,
Dichtlippenabschnitte (7), die an dem flachen Dichtungsabschnitt (6) ausgebildet sind, und
zumindest einen konvexen Abschnitt (8), der an dem flachen Dichtungsabschnitt (6) als ein Spielraum ausgebildet ist, wenn die Dichtlippenabschnitte (7) komprimiert sind; und wobei die Komponente **dadurch gekennzeichnet ist, dass**
die Dicke (d3) des gummiimprägnierten Abschnitts (5) und des flachen Dichtungsabschnitts (6) vor dem Zusammenbau der Zellen eingestellt ist, um gleich der Dicke (d2) der Membranelektrodeneinheit (2) nach dem Zusammenbau der Zellen zu sein, und
die Dicke (d1) der Membranelektrodeneinheit (2) vor dem Zusammenbau der Zellen größer ist als die Dicke (d2) der Membranelektrodeneinheit (2) nach dem Zusammenbau der Zellen.

## Revendications

1. Composant permettant de constituer une pile à combustible (1) où un joint d'étanchéité (3) est formé d'un seul tenant avec un ensemble membrane-électrode (2), où ledit composant comprend :
ledit ensemble membrane-électrode (2) prévu entre une paire de séparateurs (4) et configuré pour être comprimé lors de l'assemblage des piles,
une partie imprégnée de caoutchouc (5) formée par imprégnation d'une partie du caoutchouc en tant que matière de moulage dans le bord périphérique de l'ensemble membrane-électrode (2),
une partie de joint plat (6) formée d'un seul tenant avec la partie imprégnée de caoutchouc (5) à l'extérieur de celle-ci et réalisée en caoutchouc,
des parties de lèvre de joint (7) formées sur la partie de joint plat (6), et
au moins une partie convexe (8) formée sur la partie de joint plat (6) en tant que jeu lorsque les parties de lèvre de joint (7) sont comprimées ; et ledit composant étant **caractérisé en ce que**
l'épaisseur (d3) de la partie imprégnée de caoutchouc (5) et de la partie de joint plat (6) avant l'assemblage de piles est réglée pour être égale à l'épaisseur (d2) de l'ensemble membrane-électrode (2) après l'assemblage des piles, et
l'épaisseur (d1) de l'ensemble membrane-électrode (2) avant l'assemblage de piles est supérieure à l'épaisseur (d2) de l'ensemble membrane-électrode (2) après l'assemblage de piles.
